# EUROPÄISCHE PATENTSCHRIFT

(11) **EP 2 932 121 B1**
(45) Veröffentlichungstag und Bekanntmachung des Hinweises auf die Patenterteilung: **11.01.2017**
(21) Anmeldenummer: 13807910.8
(22) Anmeldetag: 08.11.2013
(51) Int. Cl.: F16C 35/077, F16C 19/22, F16C 33/60

(54) **RADIAL-ROLLENWÄLZLAGER**
RADIAL ROLLING ELEMENT BEARING
PALIER À ROULEMENT RADIAL À ROULEAUX

(30) Priorität: 14.12.2012 DE 102012223222
(43) Veröffentlichungstag der Anmeldung: 21.10.2015
(73) Patentinhaber: Schaeffler Technologies AG & Co. KG, 91074 Herzogenaurach (DE)
(72) Erfinder: AUST, Jan-Rene, 91058 Erlangen (DE); AKYOL, Ekrem, 91301 Forchheim (DE); SCHEDL, Edgar, 90556 Cadolzburg (DE)
(86) Internationale Anmeldenummer: PCT/DE2013/200285
(87) Internationale Veröffentlichungsnummer: WO 2014/090239

(56) Entgegenhaltungen:
- DE-A1- 2 931 348
- DE-A1- 10 246 527
- FR-A- 913 745
- US-A- 2 094 252

## Beschreibung

### Gebiet der Erfindung

Die Erfindung betrifft ein Radial-Rollenwälzlager nach den oberbegriffsbildenden Merkmalen des Patentanspruchs 1, welches insbesondere vorteilhaft als Loslager für hohe Radialkräfte und geringe Axialkräfte bei der Lagerung von Wellen anwendbar ist.

### Hintergrund der Erfindung

In der Wälzlagertechnik ist es allgemein bekannt, dass die Lagerung von Wellen zumeist in zwei als Festlager und als Loslager ausgebildeten Lagerstellen erfolgt, da somit Fertigungstoleranzen und durch Wärmedehnungen bedingte Längenänderungen zwischen der Welle und einem Gehäuse ausgeglichen werden können, ohne dass zusätzliche Verspannkräfte auf die Lager wirken. Dabei übernimmt das axial festgelegte Festlager neben seinem Radiallastanteil auch alle auftretenden Axialkräfte in beiden Richtungen, während das Loslager nur seinen Radiallastanteil überträgt, da es in Axialrichtung nicht festgelegt ist und dadurch auch keine Axialkräfte übernehmen kann. Der Ausgleich der Fertigungstoleranzen und Wärmedehnungen erfolgt somit ausschließlich über das Loslager, und zwar an der Sitzstelle des Innenrings oder im Lager selbst.

Ein gattungsbildendes Radial-Rollenwälzlager für eine typische Loslagerung einer radial hoch belasteten Welle ist beispielhaft aus der DE 2 931 348 A1 vorbekannt. Dieses als Radial-Zylinderrollenlager ausgebildete Loslager besteht im Wesentlichen aus einem in ein Gehäuse eingesetzten glattzylindrischen Außenring und aus einem in diesem Außenring angeordneten Rollenkranz, der durch eine Vielzahl in einen Lagerkäfig eingesetzter sowie von diesem in Umfangsrichtung in gleichmäßigen Abständen gehaltener Wälzkörper gebildet wird. Die als Zylinderrollen ausgebildeten Wälzkörper rollen dabei auf einer durch die Innenmantelfläche des Außenrings gebildeten Außenlaufbahn und auf einer durch die Außenmantelfläche eines auf die Welle aufgeschobenen glattzylindrischen Innenrings gebildeten Innenlaufbahn ab, die in anderen Anwendungen auch durch die Außenmantelfläche der Welle selbst gebildet wird. Zur axialen Führung des Rollenkranzes liegen darüber hinaus an den Axialseiten des Außenrings zwei separate Bordscheiben an, die zusammen mit dem Außenring durch einerseits als in eine umlaufende Nut im Gehäuse eingreifender Sprengring und andererseits als verstellbarer Spannring ausgebildete Sicherungselemente gegen axiales Verschieben fixiert werden.

US 2 094 252 A1 zeigt ein Radial-Rollenwälzlager gemäß Oberbegriff des Anspruchs 1.

Nachteilig bei dem vorbeschriebenen Radial-Rollenwälzlager ist es jedoch, dass die separaten Bordscheiben vom Lagerhersteller lose mitgeliefert werden müssen und somit bereits einen relativ hohen Montageaufwand beim Lageranwender verursachen. Zusätzlich erfolgt die axiale Sicherung des Außenrings sowie der an diesem anliegenden Bordscheiben im Gehäuse durch zwei weitere lose Bauteile, die bei hohen Lagerstückzahlen durch den Lagerhersteller neben den lose mitgelieferten Bordscheiben ebenfalls gesondert magaziniert mitgeliefert werden müssen. Der ohnehin hohe Aufwand für die Montage derartiger Radial-Rollenwälzlager wird somit außerdem durch ein umständliches Ent-nehmen der Sicherungselemente aus dem Magazin und durch die notwendige Verwendung gesonderter Montagewerkzeuge für diese Sicherungselemente noch weiter erhöht und hat sich deshalb als äußerst kostenungünstig erwiesen.

### Aufgabe der Erfindung

Ausgehend von den dargelegten Nachteilen des bekannten Standes der Technik liegt der Erfindung deshalb die Aufgabe zu Grunde, ein Radial-Rollenwälzlager zu konzipieren, bei dem die Montage und die Sicherung des Außenrings gegen axiales Verschieben durch Verringerung der separaten Bauteile vereinfacht und ohne gesonderte Montagewerkzeuge möglich ist und das sich dadurch durch niedrige Montagekosten auszeichnet.

### Beschreibung der Erfindung

Erfindungsgemäß wird diese Aufgabe bei einem Radial-Rollenwälzlager nach dem Oberbegriff des Anspruchs 1 derart gelöst, dass die Bordscheiben einen rechtwinkligen Profilquerschnitt mit einem horizontalen Befestigungsschenkel und einem vertikalen Bordschenkel aufweisen und durch Aufpressen ihrer horizontalen Befestigungsschenkel auf zwei umlaufende Stufenabsätze in den Randbereichen der Außenmantelfläche des Außenrings an diesem fixiert sind und dass die in Vertiefungen im Gehäuse eingreifenden Sicherungselemente zur axialen Fixierung des Rollenwälzlagers als in die Befestigungsschenkel der Bordscheiben integrierte Federelemente ausgebildet sind.

Der Erfindung liegt somit die nicht ohne weiters auf der Hand liegende Erkenntnis zugrunde, dass es durch eine Fixierung der Bordscheiben am Außenring und durch eine geeignete Form der Integration der Sicherungselemente in die Bordscheiben möglich ist, einerseits die Anzahl der separaten Bauteile und somit die notwendige Liefermenge des Herstellers für derartige Radial-Rollen-wälzlager zu minimieren und andererseits zugleich deren Montageaufwand und die Kosten dafür erheblich zu senken, da das Entnehmen der Sicherungselemente aus einem Magazin entfallen kann und das Einsetzen des mit den Bordscheiben vormontierten Rollenwälzlagers in ein Gehäuse in einem einzigen Arbeitschritt ohne gesonderte Montagewerkzeuge erfolgen kann.

Bei dem erfindungsgemäß ausgebildeten Radial-Rollenwälzlager ist vorgesehen, dass die horizontalen Befestigungsschenkel der Bordscheiben über mehrere gleichmäßig umfangsverteilt in deren Umfangsflächen eingearbeitete sowie radial nach innen gerichtete Zentriersicken auf den umlaufenden Stufenabsätzen in den Randbereichen der Außenmantelfläche des Außenrings an diesem fixiert sind. Diese Zentriersicken sind quer über die gesamte Breite der Umfangsflächen der Befestigungsschenkel der Bordscheiben eingeprägt und weisen bevorzugt einen halbrunden Profilquerschnitt auf, durch den diese einen Linienkontakt zu den Stufenabsätzen im Außenring aufweisen. Zur genauen Zentrierung und Fixierung der Bordscheiben auf den Stufenabsätzen im Außenring hat es sich dabei als ausreichend erwiesen, drei dieser Zentriersicken um jeweils 120° versetzt zueinander an der Umfangsfläche des Befestigungsschenkels jeder Bordscheibe anzuordnen, wobei jedoch auch mehr als drei Zentriersicken je Bordscheibe möglich wären. Ebenso ist es möglich, die Fixierung der Befestigungsschenkel der Bordscheiben auf den umlaufenden Stufenabsätzen des Außenrings anstelle mit quer angeordneten Zentriersicken mit mehreren gleichmäßig umfangsverteilten, axial mittig in die Befestigungsschenkel eingearbeiteten Zentrierkörnpunkten od. dgl. zu realisieren, die dann einen Punktkontakt zu den Stufenabsätzen im Außenring aufweisen.

Bevorzugte Ausgestaltungen und vorteilhafte Weiterbildungen des erfindungsgemäß ausgebildeten Radial-Rollenwälzlagers werden in den Unteransprüchen 2-5 beschrieben.

Eine zweckmäßige Weiterbildung des erfindungsgemäß ausgebildeten Radial-Rollenwälzlagers ist es nach Anspruch 2 desweiteren, dass die Tiefe der Stufenabsätze am Außenring der Materialstärke der Befestigungsschenkel plus der Tiefe der Zentrierkörnpunkte entspricht. Dadurch sind die Umfangsflächen der Befestigungsschenkel der Bordscheiben und die Außenmantelfläche des Außenrings in einer horizontalen Ebene angeordnet und bilden somit in vorteilhafter Weise einen glattzylindrischen Lageraußenmantel.

Gemäß Anspruch 3 zeichnet sich das erfindungsgemäß ausgebildete Radial-Rollenwälzlager darüber hinaus noch dadurch aus, dass die in die Befestigungsschenkel der Bordscheiben integrierten Federelemente zur axialen Fixierung des Rollenwälzlagers als aus den Befestigungsschenkeln herausgestellte elastische Rastzungen ausgebildet sind, die an ihren freien Enden eine radial nach außen gerichtete Wölbung oder Abwinkelung aufweisen. Das Herausstellen der Rastzungen kann dabei je Rastzunge entweder durch jeweils zwei vom freien Rand der Befestigungsschenkel ausgehende, quer in diese eingearbeitete linienförmige Freischnitte gleicher Länge oder durch jeweils einen aus dem

Befestigungsschenkel herausgearbeiteten U-förmigen Freischnitt erfolgen, dessen Mittelteil parallel zum Rand der Befestigungsschenkel verläuft. Die an den freien Enden der Rastzungen angeformten Wölbungen oder Abwinkelungen sind dann die Teile der Rastzungen, die zur axialen Fixierung des Rollenwälzlagers in zwei Vertiefungen im Lagersitz eines Gehäuses einrasten, wobei die Vertiefungen bei Rastzungen mit Wölbungen als zwei umlaufende Nuten und bei Rastzungen mit Abwinkelungen als zwei mehrfach unterbrochene Nuten oder zwei Reihen von Bohrungen ausgebildet sind. Eine optimale axiale Fixierung des Rollenwälzlagers wird dabei erreicht, wenn jede Bordscheibe ebenfalls drei um 120° versetzt zueinander, jeweils mittig zwischen den Zentriersicken angeordnete Rastnasen in ihrem Befestigungsschenkel aufweist, wobei jedoch auch weniger als drei Rastnasen je Bordscheibe ausreichend sein können.

Nach Anspruch 4 ist es schließlich noch ein weiteres Merkmal des erfindungsgemäß ausgebildeten Radial-Rollenwälzlagers, dass die durch die Zentriersicken in den Befestigungsschenkeln entstehende Spalte zwischen diesen und den Stufenabsätzen am Außenring einerseits als Einfederräume für die Rastzungen bei der Lagermontage und andererseits als Klebespalte zur Verbindung der Bordscheiben mit dem Außenring ausgebildet sind. Da die Wölbungen oder Abwinkelungen an den Enden der Rastzungen die Umfangsflächen der Befestigungsschenkel der Bordscheiben überragen, ist es bei der Montage des Radialwälzlagers notwendig, diese zum behinderungsfreien Einschieben des Lagers in den Lagersitz radial auf die Ebene der Umfangsflächen abzusenken. Der dazu erforderliche Raum unterhalb der Befestigungsschenkel der Bordscheiben kann somit durch die Spalte bereit gestellt werden, die durch die Zentriersicken in den Befestigungsschenkeln zwischen diesen und den Stufenabsätzen am Außenring entstehen. Gleichzeitig weisen diese Spalte eine geeignete definierte Höhe und Tiefe auf, um diese mit einem Klebstoff zur endgültigen Verbindung der Bordscheiben mit dem Außenring nutzen zu können. Dazu werden die Klebespalte nach Anspruch 5 vollständig mit einem Klebstoff, vorzugsweise aus der Gruppe der Zweikomponentenkleber oder aus der Gruppe der anaeroben Klebstoffe, befüllt, der optional mit einem kugeligen Füllstoff,

beispielsweise Titanoxid oder Aluminiumpulver, vermischt ist, wobei zur Sicherung der Funktion der Rastzungen an den Bordscheiben dabei die Einfederräume in geeigneter Weise von Klebstoff freizuhalten sind.

### Kurze Beschreibung der Zeichnungen

Eine bevorzugte Ausführungsform des erfindungsgemäß ausgebildeten Radial-Rollenwälzlagers wird nachfolgend unter Bezugnahme auf die beigefügten Zeichnungen näher erläutert. Dabei zeigen:
- Figur 1: eine schematische Darstellung einer Seitenansicht auf ein in ein Gehäuse eingesetztes und eine Welle lagerndes erfindungsgemäß ausgebildetes Radial-Rollenwälzlager;
- Figur 2: eine schematische Darstellung des Querschnitts A - A gemäß Figur 1 durch das in ein Gehäuse eingesetzte erfindungsgemäß ausgebildete Radial-Rollenwälzlager;
- Figur 3: eine vergrößerte schematische Darstellung der Einzelheit X des erfindungsgemäß ausgebildeten Radial-Rollenwälzlagers gemäß Figur 2;
- Figur 4: eine vergrößerte Darstellung einer Draufsicht auf eine der beiden separaten Bordscheiben des erfindungsgemäß ausgebildeten Radial-Rollenwälzlagers;
- Figur 5: die Darstellung des Querschnittes B - B durch die separate Bordscheibe des erfindungsgemäß ausgebildeten RadialRollen-wälzlagers gemäß Figur 4;
- Figur 6: die nochmals vergrößerte Ansicht C auf die separate Bordscheibe des erfindungsgemäß ausgebildeten RadialRollenwälz-lagers gemäß Figur 4.

### Ausführliche Beschreibung der Zeichnungen

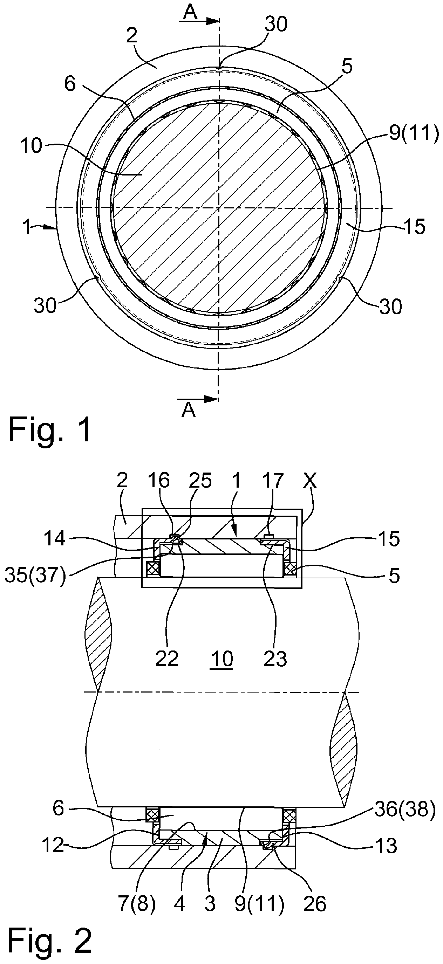

In den Figuren 1 und 2 ist schematisch ein als Loslager ausgebildetes Radial-Rollenwälzlager 1 zur Lagerung einer Welle 10 dargestellt, welches im Wesentlichen aus einem in ein Gehäuse 2 eingesetzten zylindrischen Außenring 3 und aus einem in diesem Außenring 3 angeordneten Rollenkranz 4 besteht. Dieser Rollenkranz 4 wird in bekannter Weise durch eine Vielzahl in einen Lagerkäfig 5 eingesetzter sowie von diesem in Umfangsrichtung in gleichmäßigen Abständen gehaltener rollenförmiger Wälzkörper 6 gebildet, die auf einer durch die Innenmantelfläche 7 des Außenrings 3 gebildeten Außenlaufbahn 8 und auf einer durch die Außenmantelfläche 9 der Welle 10 gebildeten Innenlaufbahn 11 abrollen. Deutlich sichtbar erfolgt die die axiale Führung des Rollenkranzes 4 dabei durch zwei an den Axialseiten 12, 13 des Außenrings 3 anliegende, separate Bordscheiben 14, 15, die zusammen mit dem Außenring 3 durch in Vertiefungen 16, 17 im Gehäuse 2 eingreifende Sicherungselemente axial fixiert sind.

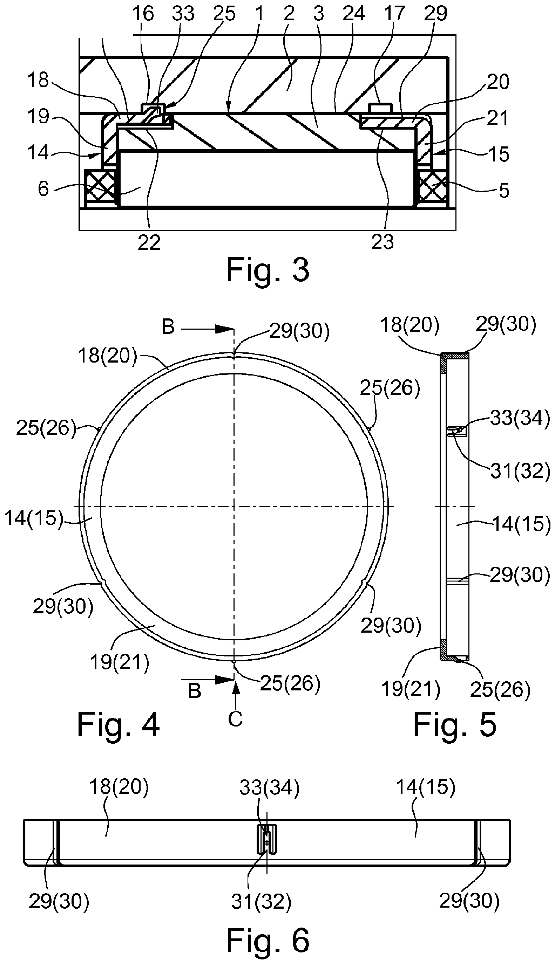

Aus den Figuren 2 und 3 ist desweiteren ersichtlich, dass die Bordscheiben 14, 15 erfindungsgemäß einen rechtwinkligen Profilquerschnitt mit einem horizontalen Befestigungsschenkel 18, 20 und einem vertikalen Bordschenkel 19, 21 aufweisen und durch Aufpressen ihrer horizontalen Befestigungsschenkeln 18, 20 auf zwei umlaufende Stufenabsätze 22, 23 in den Randbereichen der Außenmantelfläche 24 des Außenrings 3 an diesem fixiert sind und dass die in Vertiefungen 16, 17 im Gehäuse 2 eingreifenden Sicherungselemente zur axialen Fixierung des Rollenwälzlagers 1 als in die Befestigungsschenkel 18, 20 der Bordscheiben 14, 15 integrierte Federelemente 25, 26 ausgebildet sind.

Darüber hinaus ist in den Figuren 4 bis 6 zu sehen, dass die horizontalen Befestigungsschenkel 18, 20 der Bordscheiben 14, 15 über drei um 120° versetzt zueinander in deren Umfangsflächen 27, 28 eingearbeitete sowie radial nach innen gerichtete Zentriersicken 29, 30 auf den umlaufenden Stufenabsätzen 22, 23 am Außenring 3 fixiert sind. Diese Zentriersicken 29, 30 sind quer über die gesamte Breite der Umfangsflächen 27, 28 der Befestigungsschenkel 18, 20 eingeprägt und weisen einen halbrunden Profilquerschnitt auf, durch den diese einen Linienkontakt zu den Stufenabsätzen 22, 23 im Außenring 3 aufweisen. Die Tiefe der Stufenabsätze 22, 23 am Außenring 3 entspricht dabei, wie Figur 3 verdeutlicht, der Materialstärke der Befestigungsschenkel 18, 20 plus der Tiefe der Zentriersicken 29, 30, so dass die Umfangsflächen 27, 28 der Befestigungsschenkel 18, 20 der Bordscheiben 14, 15 und die Außenmantelfläche 24 des Außenrings 3 in einer horizontalen Ebene angeordnet sind. Weiterhin geht insbesondere aus Figur 6 hervor, dass die in die Befestigungsschenkel 18, 20 integrierten Federelemente 25, 26 zur axialen Fixierung des Rollenwälzlagers 1 als aus den Befestigungsschenkeln 18, 20 herausgestellte elastische Rastzungen 31, 32 ausgebildet sind, die an ihren freien Enden jeweils eine radial nach außen gerichtete Wölbung 33, 34 aufweisen. Das Herausstellen der Rastzungen 31, 32 erfolgt dabei je Rastzunge 31, 32 durch jeweils einen aus dem Befestigungsschenkel 18, 20 herausgearbeiteten U-förmigen Freischnitt, dessen Mittelteil parallel zum Rand der Befestigungsschenkel 18, 20 verläuft. Die an den freien Enden der Rastzungen 31, 32 angeformten Wölbungen 33, 34 rasten dann zur axialen Fixierung des Rollenwälzlagers 1 in die beiden Vertiefungen 16, 17 im Lagersitz des Gehäuses 2 ein, wobei die Vertiefungen 16, 17 bevorzugt als zwei umlaufende Nuten ausgebildet sind. Dabei weist jede Bordscheibe 14, 15, wie in Figur 4 dargestellt, ebenfalls drei um 120° versetzt zueinander, jeweils mittig zwischen den Zentriersicken 29, 30 angeordnete Rastzungen 31 32 in ihrem Befestigungsschenkel 18, 20 auf, so dass eine optimale axiale Fixierung des Rollenwälzlagers 1 erreicht wird.

Schließlich ist aus den Figuren 2 und 3 noch ersichtlich, dass die durch die Zentriersicken 29, 30 in den Befestigungsschenkeln 18, 20 entstehende Spalte zwischen diesen und den Stufenabsätzen 22, 23 am Außenring 3 einerseits als Einfederräume 35, 36 für die Rastzungen 31, 32 bei der Lagermontage und andererseits als Klebespalte 37, 38 zur Verbindung der Bordscheiben 14, 15 mit dem Außenring 3 ausgebildet sind. Da die Wölbungen 33, 34 an den Enden der Rastzungen 31, 32 die Umfangsflächen 27, 28 der Befestigungsschenkel 18, 20 der Bordscheiben 14, 15 überragen, ist es zur behinderungsfreien Montage des Radial-Rollenwälzlagers 1 notwendig, diese in den Lagersitz radial auf die Ebene der Umfangsflächen 27, 28 der Befestigungsschenkel 18, 20 abzusenken. Der dazu erforderliche Raum unterhalb der Befestigungsschenkel 18, 20 der Bordscheiben 14, 15 wird somit durch die Spalte bereit gestellt, die durch die Zentriersicken 29, 30 in den Befestigungsschenkeln 18, 20 zwischen diesen und den Stufenabsätzen 22, 23 am Außenring 3 entstehen. Gleichzeitig weisen diese Spalte eine geeignete Höhe und Tiefe auf, um diese mit einem Klebstoff zur endgültigen Verbindung der Bordscheiben 14, 15 mit dem Außenring 3 nutzen zu können. Die Klebespalte sind deshalb vollständig mit einem Klebstoff aus der Gruppe der Zweikomponentenkleber befüllt, der mit einem kugeligen Füllstoff, beispielsweise Titanoxid, vermischt ist, wobei die Einfederräume der Rastzungen 31, 32 von Klebstoff freigehalten werden.

### Bezugszahlenliste

| | | | |
|---|---|---|---|
| 1 | Rad ial-Rol lenwälzlager | 20 | Befestigungsschenkel von 15 |
| 2 | Gehäuse | | |
| 3 | Außenring | 21 | Bordschenkel von 15 |
| 4 | Rollenkranz | 22 | Stufenabsatz in 24 |
| 5 | Lagerkäfig | 23 | Stufenabsatz in 24 |
| 6 | Wälzkörper | 24 | Außenmantelfläche von 3 |
| 7 | Innenmantelfläche von 3 | 25 | Federelemente in 18 |
| 8 | Außenlaufbahn von 6 | 26 | Federelemente in 20 |
| 9 | Außenmantelfläche von 10 | 27 | Umfangsfläche von 18 |
| 10 | Welle | 28 | Umfangsfläche von 20 |
| 11 | Innenlaufbahn von 3 | 29 | Zentriersicken in 27 |
| 12 | Axialseite von 3 | 30 | Zentriersicken in 28 |
| 13 | Axialseite von 3 | 31 | Rastzungen in 18 |
| 14 | Bordscheibe an 12 | 32 | Rastzungen in 20 |
| 15 | Bordscheibe an 13 | 33 | Wölbung an 31 |
| 16 | Vertiefung in 2 | 34 | Wölbungen an 32 |
| 17 | Vertiefung in 2 | 35 | Einfederraum für 31 |
| 18 | Befestigungsschenkel von 14 | 36 | Einfederraum für 32 |
| | | 37 | Klebespalt für 14 |
| 19 | Bordschenkel von 14 | 38 | Klebespalt für 15 |

## Patentansprüche

1. Radial-Rollenwälzlager (1), bestehend aus einem in ein Gehäuse (2) eingesetzten zylindrischen Außenring (3) und aus einem in diesem Außenring (3) angeordneten Rollenkranz (4), der durch eine Vielzahl in einen Lagerkäfig (5) eingesetzter sowie von diesem in Umfangsrichtung in gleichmäßigen Abständen gehaltener rollenförmiger Wälzkörper (6) gebildet wird, die auf einer durch die Innenmantelfläche (7) des Außenrings (3) gebildeten Außenlaufbahn (8) und auf einer durch die Außenmantelfläche (9) einer zu lagernden Welle (10) oder eines auf die Welle (10) aufgeschobenen glattzylindrischen Innenrings gebildeten Innenlaufbahn (11) abrollen, wobei die axiale Führung des Rollenkranzes (4) durch zwei an den Axialseiten (12, 13) des Außenrings (3) anliegende, separate Bordscheiben (14, 15) erfolgt, die zusammen mit dem Außenring (3) durch in Vertiefungen (16, 17) im Gehäuse (2) eingreifende Sicherungselemente axial fixiert sind, wobei die Bordscheiben (14, 15) einen rechtwinkligen Profilquerschnitt mit einem horizontalen Befestigungsschenkel (18, 20) und einem vertikalen Bordschenkel (19, 21) aufweisen und durch Aufpressen ihrer horizontalen Befestigungsschenkeln (18, 20) auf zwei umlaufende Stufenabsätze (22, 23) in den Randbereichen der Außenmantelfläche (24) des Außenrings (3) an diesem fixiert sind, **dadurch gekennzeichnet, dass** das Aufpressen der Bordscheiben (14, 15) auf die umlaufenden Stufenabsätze (22, 23) über mehrere gleichmäßig umfangsverteilt in die Umfangsflächen (27, 28) der horizontalen Befestigungsschenkel (18, 20) eingearbeitete sowie radial nach innen gerichtete Zentriersicken (29, 30) erfolgt und die in Vertiefungen (16, 17) im Gehäuse (2) eingreifenden Sicherungselemente zur axialen Fixierung des Rollenwälzlagers (1) als in die Befestigungsschenkel (18, 20) der Bordscheiben (14, 15) integrierte Federelemente (25, 26) ausgebildet sind.

2. Radial-Rollenwälzlager nach Anspruch 1, **dadurch gekennzeichnet, dass**
die Tiefe der Stufenabsätze (22, 23) am Außenring (3) der Materialstärke der Befestigungsschenkel (18, 20) plus der Tiefe der Zentriersicken (29, 30) entspricht, so dass die Umfangsflächen (27, 28) der Befestigungsschenkel (18, 20) der Bordscheiben (14, 15) und die Außenmantelfläche (24) des Außenrings (3) in einer horizontalen Ebene angeordnet sind.

3. Radial-Rollenwälzlager nach Anspruch 2, **dadurch gekennzeichnet, dass**
die in die Befestigungsschenkel (18, 20) integrierten Federelemente (25, 26) zur axialen Fixierung des Rollenwälzlagers (1) als aus den Befestigungsschenkeln (18, 20) herausgestellte elastische Rastzungen (31, 32) ausgebildet sind, die an ihren freien Enden jeweils eine radial nach außen gerichtete Wölbung (33, 34) oder Abwinkelung aufweisen.

4. Radial-Rallenwälzlager nach Anspruch 3, **dadurch gekennzeichnet, dass**
die durch die Zentriersicken (29, 30) in den Befestigungsschenkeln (18, 20) entstehende Spalte zwischen diesen und den Stufenabsätzen (22, 23) am Außenring (3) einerseits als Einfederräume (35, 36) für die Rastzungen (31, 32) bei der Lagermontage und andererseits als Klebespalte (37, 38) zur Verbindung der Bordscheiben (14, 15) mit dem Außenring (3) ausgebildet sind,

5. Radial-Rollenwälzlager nach Anspruch 4, **dadurch gekennzeichnet, dass**
die jeweils durch die Einfederräume (35, 36) unterbrochenen Klebespalte (37, 38) vollständig mit einem Klebstoff, vorzugsweise aus der Gruppe der Zweikomponentenkleber oder aus der Gruppe der anaeroben Klebstoffe, befüllt sind, der optional mit einem kugeligen Füllstoff, beispielsweise Titanoxid oder Aluminiumpulver, vermischt ist.

## Claims

1. Radial roller bearing (1), consisting of a cylindrical outer ring (3) which is inserted into a housing (2), and of a roller crown ring (4) which is arranged in the said outer ring (3) and is formed by a multiplicity of roller-shaped rolling bodies (6) which are inserted into a bearing cage (5), held at uniform spacings in the circumferential direction by the said bearing cage (5), and roll on an outer raceway (8) which is formed by the inner circumferential face (7) of the outer ring (3) and on an inner raceway (11) which is formed by the outer circumferential face (9) of a shaft (10) to be mounted or a smooth cylindrical inner ring which is pushed onto the shaft (10), the axial guidance of the roller crown ring (4) taking place by way of two separate flanged discs (14, 15) which bear against the axial sides (12, 13) of the outer ring (3) and are fixed axially together with the outer ring (3) by way of securing elements which engage into the depressions (16, 17) in the housing (2), the flanged discs (14, 15) having a right-angled profile cross section with a horizontal fastening limb (18, 20) and a vertical flange limb (19, 21) and being fixed on the outer ring (3) by way of the fastening limbs (18, 20) of the flanged discs (14, 15) being pressed onto two circumferential stepped shoulders (22, 23) in the edge regions of the outer circumferential face (24) of the outer ring (3), **characterized in that** pressing of the flanged discs (14, 15) onto the circumferential stepped shoulders (22, 23) takes place via a plurality of radically inwardly directed centring beads (29, 30) which are incorporated in a uniformly circumferentially distributed manner into the circumferential faces (27, 28) of the horizontal fastening limbs (18, 20), and the securing elements which engage into depressions (16, 17) in the housing (2) for axial fixing of the roller bearing (1) are configured as spring elements (25, 26) which are integrated into the fastening limbs (18, 20) of the flanged discs (14, 15).

2. Radial roller bearing according to Claim 1, **characterized in that** the depth of the stepped shoulders (22, 23) on the outer ring (3) corresponds to' the material thickness of the fastening limbs (18, 20) plus the depth of the centring beads (29, 30), with the result that the circumferential faces (27, 28) of the fastening limbs (18, 20) of the flanged discs (14, 15) and the outer circumferential face (24) of the outer ring (3) are arranged in a horizontal plane.

3. Radial roller bearing according to Claim 2, **characterized in that** the spring elements (25, 26) which are integrated into the fastening limbs (18, 20) for axial fixing of the roller bearing (1) are configured as elastic latching tongues (31, 32) which are turned out of the fastening limbs (18, 20) and, at their free ends, have in each case one radially outwardly directed curvature (33, 34) or angled-away portion.

4. Radial roller bearing according to Claim 3, **characterized in that** the gaps which are produced by way of the centring beads (29, 30) in the fastening limbs (18, 20) between them and the stepped shoulders (22, 23) on the outer ring (3) are configured firstly as spring-in spaces (35, 36) for the latching tongues (31, 32) during the bearing assembly and secondly as adhesive gaps (37, 38) for connecting the flanged discs (14, 15) to the outer ring (3).

5. Radial roller bearing according to Claim 4, **characterized in that** the adhesive gaps (37, 38) which are interrupted in each case by way of the spring-in spaces (35, 36) are filled completely with an adhesive, preferably from the group of two-component adhesive or from the group of anaerobic adhesives, which adhesive is optionally mixed with a spherical filler material, for example titanium oxide or aluminium powder.

## Revendications

1. Palier à roulement radial à rouleaux (1), constitué d'une bague extérieure cylindrique (3) insérée dans un boîtier (2) et d'une couronne à rouleaux (4) disposée dans cette bague extérieure (3), laquelle est formée par une pluralité de corps de roulement en forme de rouleaux (6) insérés dans une cage de palier (5) et retenus à intervalles réguliers par celle-ci dans la direction périphérique, lesquels roulent sur un chemin de roulement extérieur (8) formé par la surface d'enveloppe intérieure (7) de la bague extérieure (3) et sur un chemin de roulement intérieur (11) formé par la surface d'enveloppe extérieure (9) d'un arbre à supporter (10) ou d'une bague intérieure cylindrique lisse poussée sur l'arbre (10), le guidage axial de la couronne à rouleaux (4) étant assuré par deux disques de bord séparés (14, 15) s'appliquant contre les côtés axiaux (12, 13) de la bague extérieure (3), lesquels sont fixés axialement conjointement avec la bague extérieure (3) par des éléments de fixation s'engageant dans des renfoncements (16, 17) dans le boîtier (2),
les disques de bord (14, 15) présentant une section transversale de profilé rectangulaire avec une branche de fixation horizontale (18, 20) et une branche de bord verticale (19, 21) et étant fixés par pressage de leurs branches de fixation horizontales (18, 20) contre deux épaulements étagés périphériques (22, 23) dans les régions de bord de la surface d'enveloppe extérieure (24) de la bague extérieure (3) contre cette derrière, **caractérisé en ce que** le pressage des disques de bord (14, 15) contre les épaulements étagées périphériques (22, 23) s'effectue par le biais de plusieurs moulures de centrage (29, 30) réparties sur la périphérie de marnière uniforme, incorporées dans les surfaces périphériques (27, 28) des branches de fixation horizontale (18, 20) et orientées radialement vers l'intérieur et les éléments de fixation s'engageant dans des renfoncements (16, 17) dans le boîtier (2), pour la fixation axiale du palier à roulement à rouleaux (1), étant réalisés sous forme d'éléments de ressort (25, 26) intégrés dans les branches de fixation (18, 20) des disques de bord (14, 15).

2. Palier à roulement radial à rouleaux selon la revendication 1,
**caractérisé en ce que**
la profondeur des épaulements étagés (22, 23) au niveau de la bague extérieure (3) correspond à l'épaisseur de matériau des branches de fixation (18, 20) plus la profondeur des moulures de centrage (29, 30) de telle sorte que les surfaces périphériques (27, 28) des branches de fixation (18, 20) des disques de bord (14, 15) et la surface d'enveloppe extérieure (24) de la bague extérieure (3) soient disposées dans un plan horizontal.

3. Palier à roulement radial à rouleaux selon la revendication 2,
**caractérisé en ce que**
les éléments de ressort (25, 26) intégrés dans les branches de fixation (18, 20) pour la fixation axiale du palier à roulement à rouleaux (1) sont réalisés sous forme de langues d'encliquetage élastiques (31, 32) saillant hors des branches de fixation (18, 20), qui présentent au niveau de leurs extrémités libres à chaque fois un cintrage (33, 34) ou un coudage orienté radialement vers l'extérieur.

4. Palier à roulement radial à rouleaux selon la revendication 3,
**caractérisé en ce que**
les fentes créées par les moulures de centrage (29, 30) dans les branches de fixation (18, 20) entre celles-ci et les épaulements étagés (22, 23) au niveau de la bague extérieure (3) sont réalisées d'une part en tant qu'espaces de suspension (35, 36) pour les langues d'encliquetage (31, 32) lors du montage du palier et d'autre part en tant que fentes de collage (37, 38) pour la connexion des disques de bord (14, 15) à la bague extérieure (3).

5. Palier à roulement radial à rouleaux selon la revendication 4, **caractérisé en ce que** les fentes de collage (37, 38) à chaque fois interrompues par les espaces de suspension (35, 36) sont complètement remplies d'un adhésif, de préférence parmi le groupe des adhésifs à deux composants ou parmi le groupe des adhésifs anaérobie, lequel adhésif est en option mélangé avec une charge granulaire, par exemple de l'oxyde de titane ou de la poudre d'aluminium.
